# EUROPEAN PATENT SPECIFICATION

(11) **EP 2 673 151 B1**
(45) Date of publication and mention of the grant of the patent: **21.06.2017**
(21) Application number: 12705237.1
(22) Date of filing: 09.02.2012
(51) Int. Cl.: B60H 3/06, B60H 1/00, B60H 1/26

(54) **HVAC SYSTEM FOR A WORK VEHICLE**
HVAC-SYSTEM FÜR EIN ARBEITSFAHRZEUG
SYSTÈME HVAC POUR VÉHICULE DE CHANTIER

(30) Priority: 11.02.2011 US 201161463061 P; 11.02.2011 US 201161463059 P; 11.02.2011 US 201161463112 P; 26.05.2011 US 201113116495; 26.05.2011 US 201113116050; 29.08.2011 US 201113220250
(43) Date of publication of application: 18.12.2013
(73) Proprietor: CNH Industrial Italia S.p.A., 10135 Torino (IT)
(72) Inventor: TAYLOR, Lance A., Wichita, Kansas 67226 (US); LEUPOLD, Alan G., Plainfield, Illinois 60586 (US)
(74) Representative: CNH Industrial IP Department
(86) International application number: PCT/EP2012/052175
(87) International publication number: WO 2012/107512

(56) References cited:
- WO-A1-82/02086
- DE-A1- 3 813 548
- US-A- 4 597 323

## Description

### Technical Field

The present invention generally relates to HVAC systems and, more particularly, to an HVAC system for use with a work vehicle. A vehicle HVAC system is disclosed in DE3813548 A1.

### Background Art

A skid steer or wheel loader or other work vehicle is commonly used to load and move substantial volumes of dirt and like material from one location to another. A conventional wheel loader includes a relatively large frame that is supported for self-propelled movement over land and has a bucket or implement mounted to one end thereof. The bucket or implement can be selectively elevated to a position above side panels on a wheel loader and can be selectively tilted to "dump" materials therefrom.

To enhance operator comfort, a heating, ventilation and air conditioning (HVAC) system can be incorporated into an operator cab. Wheel loaders are often used in environments containing elevated concentrations of dust and/or moisture, which may significantly decrease the efficiency of the HVAC system, as well as reduce operator comfort. Filters, which may be used to reduce the amount of dust and/or moisture, often suffer from shortened service lives when used to directly, e.g., exterior of the work vehicle, clean the ambient air, especially in environments having enhanced levels of airborne dust or other particulate matter.

In addition, due to the compactness of wheel loaders, the operator is positioned in close proximity to the motor and other components of the work vehicle, and thus, subjected to the noise generated by the work vehicle and components.

Thus, there is a need and a desire for an HVAC system for use with work vehicles that provides operator comfort while simultaneously achieving extended filter service lives, maintaining efficient operation and further, providing improved noise reduction.

It is known to use baffles to affect the incoming airflow in vehicle HVAC systems to provide a degree of filtering, but the geometry of such baffled systems plays a significant role in their effectiveness, in terms of filtration and noise reduction, as well as serviceability. They are also severely limited by the available space. Examples of these can be found in US2011840, US2685244, US2852997 and US4597323.

### Disclosure of Invention

According to a first aspect of the present invention there is provided an HVAC system as set forth in claim 1 of the appended claims.

According to a second aspect of the present invention, there is provided a work vehicle as set forth in claim 4 of the appended claims.

An advantage of the present invention is an HVAC system that is arranged to provide sound reduction as perceived by the operator.

A further advantage of the present invention is an HVAC system that extends the service life of the filter used in the system.

It is to be understood that an embodiment may not incorporate all of the identified advantages.

Other features and advantages of the present invention will be apparent from the following more detailed description of the preferred embodiment, taken in conjunction with the accompanying drawings which illustrate, by way of example, the principles of the invention.

### Brief Description of Drawings

FIG. 1 is a forward-looking upper perspective view of an exemplary embodiment of a work vehicle including an HVAC system of the present disclosure,
FIG. 2 is a cross-section taken along line 2-2 of FIG. 1 of the present disclosure,
FIG. 3A is a further exemplary embodiment of a forward looking view taken along line 3-3 of FIG. 2 of the present disclosure,
FIG. 3B is a further exemplary embodiment of a forward looking view taken along line 3-3 of FIG. 2 of the present disclosure,
FIG. 4 is an exemplary embodiment of a forward looking view taken along line 4-4 of FIG. 2 of the present disclosure, and
FIG. 5 is a cross-section taken along line 5-5 of FIG. 2 of the present disclosure.

### Best Mode for Carrying Out the Invention

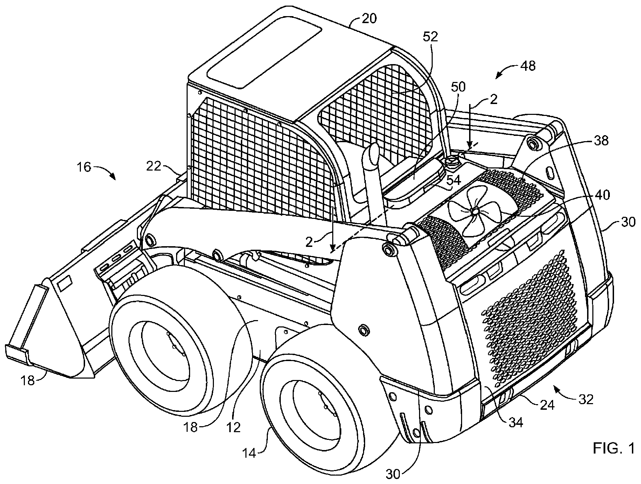

FIG. 1 shows a work vehicle 10 provided with a frame 12 that rotatably carries a driving device 14, such as a plurality of wheels, although in another embodiment, tracks may be used or activated to selectably move the vehicle. A lifting structure 16 includes an arrangement of structural members and actuators controllable by an operator (not shown) to manipulate an implement 18 to perform work. Frame 12 structurally supports an operator cab 20 or cab to surround and protect the operator, which frame 12 includes a front end 22 facing implement 18 and an opposed back end 24 with ends 22, 24 positioned between opposed lateral sides 26, 28 of the frame. Opposed posts 30 of lifting structure 16 in close proximity to back end 24 laterally surround a compartment 32 containing components for cooling a motor (not shown) for providing power to operate vehicle 10. Compartment 32 includes panels 34, 36, with a screened openings 38 formed in panel 36 as an intake for a first source of moving air 40, such as a fan or blower for cooling components contained in compartment 32.

As shown in FIGS. 1-4, an HVAC system 48 includes a first chamber 50 positioned at least partially exterior of operator cab 20 beneath a rear window 52 of the operator cab. HVAC system 48 includes an inlet 54 for receiving a flow of ambient air 56 from exterior of operator cab 20. An arrangement of louvers 58 positioned over inlet 54 results in a first change of direction 60 of the direction of flow of ambient air 56. As further shown in FIG. 1, inlet 54 is located opposite exhaust pipe 46 to minimize operator exposure to exhaust discharged from the exhaust pipe 46. However, in other embodiments, the arrangement of the exhaust pipe can be different, and therefore, not limit the position of inlet 54 to one side of first chamber 50.

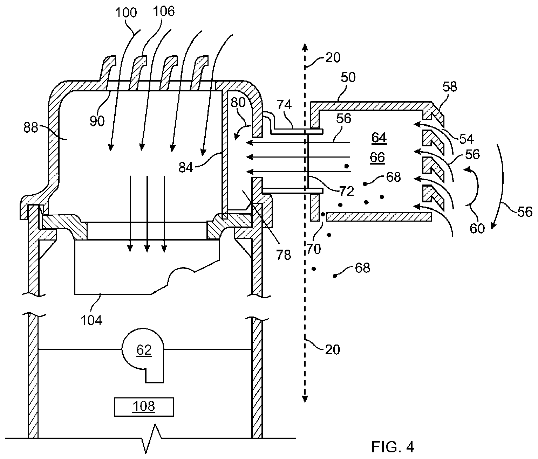

In addition, by virtue of the proximity between inlet 54 of first chamber 50 and screened openings 38, with screened openings 38 receiving a significantly greater airflow velocity and pressure than through inlet 54 during operation of the work vehicle, a flow separation occurs between inlet 54 and screened openings 38. A reason for the significantly greater airflow velocity and pressure through screened openings 38 than through inlet 54 is due to the first source of moving air 40 operating to draw significantly more airflow through compartment 32 than would be required by a second source of moving air 62 (FIG. 4) that provides airflow to HVAC system 48.

As a result of the significantly greater airflow velocity and pressure through screened openings 38 as compared with the airflow velocity and pressure through inlet 54, a comparatively greater airflow is drawn through the screened openings 38 than the airflow through inlet 54. That is, airflow associated with screened openings 38 contains a higher concentration of particulate matter, such as dust and/or moisture, than is entrained in the airflow through inlet 54. In other words, the reduced airflow velocity and pressure through inlet 54 as compared to screened openings 38 creates separated airflows between screened openings 38 and inlet 54, which separated airflows having different amounts of entrained particulate matter. Stated another way, the airflow through inlet 54 contains less particulate matter and particulate matter of a smaller size than the airflow through screened openings 38. For purposes of discussion, particulate matter and particulate matter of a smaller size or particles may include solid and/or liquid components.

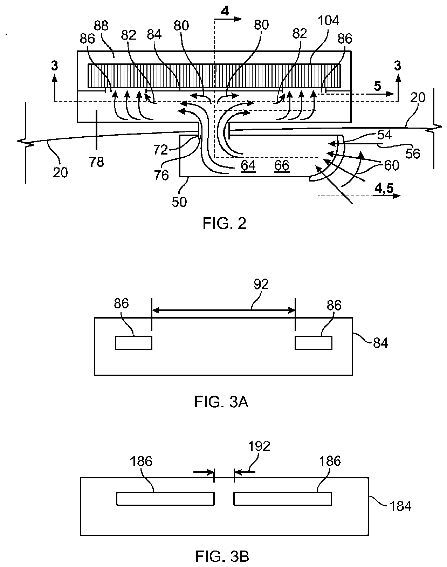

As further shown in FIG. 2, airflow 56 of ambient air passes through inlet 54 and enters first chamber 50. By virtue of the first chamber 50 being sufficiently sized, airflow 56 experiences a first air pressure reduction 64 and a first reduction in airflow velocity 66 while airflow 56 is still inside first chamber 50. The first air pressure reduction 64 and the first reduction in airflow velocity 66 is sufficient to reduce an amount of particles 68 entrained in the airflow 56 while the particles 68 are within the first chamber 50. An aperture 70 formed in first chamber 50 permits particles 68 no longer entrained in airflow 56 to exit first chamber 50. In one embodiment, aperture 70 is positioned at or near a low or lowest location of first chamber 50, permitting particles 68 to exit first chamber 50 as a result of gravitational forces urging the particles toward and then through aperture 70. In one embodiment, first chamber 50 is removable from exterior of operator cab 20. In a further embodiment, substantially all liquid particles have been removed from the airflow of ambient air prior to the airflow exiting the first chamber 50.

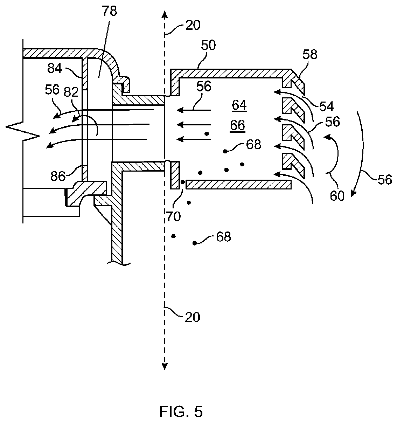

As further shown in FIG. 2-5, airflow 56 of ambient air having a reduced number of entrained particles passes through an outlet 72 formed in first chamber 50, through a conduit 74 interconnecting outlet 72 of first chamber 50 and an inlet 76 of the second chamber 78, then through the inlet 76 of the second chamber 78 and entering the second chamber. Immediately upon entering second chamber 78, airflow 56 is subjected to a second change of direction 80 which bifurcates airflow 56 prior to airflow 56 striking the wall 84 of the second chamber 78. As shown in FIG. 2, second change of direction 80 represents about a 90 degree turn, although in other embodiments, the magnitude of the turn of airflow 56 may be greater than or less than 90 degrees. After further travel along second chamber 78, airflow 56 is subjected to a third change of direction 82 while being guided through outlets 86 formed in wall 84 of second chamber 78 and entering a third chamber 88. As shown in FIG. 3A, an exemplary embodiment of wall 84 includes a spacing 92 or distance separating outlets 86 formed in wall 84. As further shown in FIG. 3B, which is an alternate embodiment of wall 184, a spacing 192 separating outlets 186 formed in wall 184 is less than spacing 92 formed in wall 84. Despite the difference in size between spacing 92 and 192, in response to sufficient airflow, spacing 192 results in the formation of a boundary layer in three dimensions prior to the airflow achieving third change of direction 82, resulting in turbulence associated with the airflow and a desirable noise reduction as perceived by the operator. The size and shapes of both openings and spacings formed in the wall of the second chamber may vary, depending upon conditions associated with operation of the work vehicle. While third change of direction 82 of airflow 56 occurs between second chamber 78 and third chamber 88, since the third change of direction 82 is considered to begin occurring while the airflow 56 is still in second chamber 78. Therefore, the third change of direction 82 is also considered to occur while the airflow 56 is still in second chamber 78.

In another embodiment, the second chamber may be configured such that more than two changes of direction may occur in the second chamber. Such changes in direction of the airflow result in a reduction of operating noise as perceived by the operator.

As further shown FIGS. 2 and 4, upon airflow 56 passing through outlets 86 of second chamber 78 and entering third chamber 88, airflow 56 is mixed with re-circulated air 100 that enters third chamber 88 through an opening 90 formed in a wall housing third chamber 88. Re-circulated air 100 may be selectably brought into thermal heat exchange with one or more heat exchangers 108 of the HVAC system by selective control of the operator, to maintain a comfortable environment (temperature and humidity control) within operator cab 20.

Once re-circulated air 100 and airflow 56 have mixed together in third chamber 88, becoming combined or mixed airflow 102, the combined or mixed airflow 102 is directed through a filter 104 prior to circulation in operator cab 20 by second source of moving air 62. Although filter 104 is positioned beneath third chamber 88, the filter may be arranged differently in other embodiments.

In order to provide further noise attenuation, opening 90 may include a number of louvers 106 that are directed away from the operator. In an exemplary embodiment, the louver direction is facing aft of the operator.

As shown in the figures, the second chamber and the third chamber may be formed from a single housing or structure. Stated another way, the second chamber and the third chamber may define housing having a unitary construction.

## Claims

1. An HVAC system (48) for a work vehicle (10) having an operator cab (20), the system comprising;
a first chamber (50) having an inlet (54) for receiving a flow of air (56) exterior of the cab (20) and an outlet (72), the inlet (54) adjacent a first source for moving air (40) for use independent of the HVAC system (48), the inlet (50) arranged to cause a first change of direction (60) of airflow (56) inside the first chamber (50), the first chamber (50) resulting in both a first air pressure reduction (64) and a first reduction of airflow velocity (66) while inside the first chamber (50) sufficient to reduce an amount of particles (68) entrained in the airflow (56) while the particles are within the first chamber (50);
a conduit (74) in fluid communication between the outlet (72) of the first chamber (50) and an inlet (76) of a second chamber (78), the second chamber (78) configured to cause both a second change of direction (80) and a third change of direction (82) of airflow (56) while inside of the second chamber (78);
a third chamber (88) configured to receive airflow (56) from an outlet (86) of the second chamber (78) and to receive re-circulated air (100) from within the cab (20), the re-circulated air (100) brought into selective thermal heat exchange with a heat exchanger (108) of the HVAC system by a second source for moving air (62), the re-circulated air (100) then entering the third chamber (88) via an opening (90) formed in the third chamber (88), the re-circulated air (100) and the airflow (56) entering the third chamber (88) from the second chamber (78) mixing together; and
a filter (104) positioned interior of the cab (20) and in fluid communication with the third chamber (88) to remove at least a portion of remaining particles (68) entrained in the mixed airflow (102).

2. The HVAC system of any preceding Claim, **characterised in that** the second change of direction (80) of the airflow (56) is about 90 degrees.

3. The HVAC system of any preceding Claim, **characterised in that** the third change of direction (82) of the airflow (56) is about 90 degrees.

4. A work vehicle (10) comprising:
a motor secured to a frame (12) for activating a driving device (14) for selectably moving the frame (12);
an operator cab (20) supported by the frame (12); and
an HVAC system (48) as claimed in any preceding claim.

5. The work vehicle (10) of Claim 4, **characterised in that** the first source for moving air (40) is associated with cooling a motor of the work vehicle (10).

6. The work vehicle (10) of Claim 4 or 5, **characterised in that** the first chamber (50) is located substantially exterior of the work vehicle (10).

7. The work vehicle (10) of Claim 6, **characterised in that** the first chamber (50) comprises an aperture (70) to remove particles (68) from the first chamber (50).

8. The work vehicle (10) of Claim 4 or any claim dependent thereon, **characterised in that** the opening (90) in the third chamber (88) comprises louvers (106) facing away from an operator.

9. The work vehicle (10) of Claim 4 or any claim dependent thereon, **characterised in that** the louvers (106) face aft of the operator.

10. The work vehicle (10) of Claim 4 or any claim dependent thereon, **characterised in that** the filter (104) is positioned beneath the third chamber (88).

11. The work vehicle (10) of Claim 4 or any claim dependent thereon, **characterised in that** the first chamber (50) is removable from exterior of the cab (20).

## Patentansprüche

1. Ein HVAC-(Heizungs-Belüftungs- und Klimatisierungs-) System (48) für ein Arbeitsfahrzeug (10) mit einer Fahrerkabine (20), wobei das System Folgendes umfasst:
eine erste Kammer (50) mit einem Einlass (54) zum Empfang einer Luftströmung (56) von außerhalb der Kabine (20) und einem Auslass (72), wobei der Einlass (54) benachbart zu einer ersten Quelle von sich bewegender Luft (40) zur Verwendung unabhängig von dem HVAC-System (48) angeordnet ist, wobei der Einlass (50) so angeordnet ist, dass er eine erste Richtungsänderung (60) der Luftströmung (56) innerhalb der ersten Kammer (50) hervorruft, wobei die erste Kammer (50) sowohl eine Verringerung (64) des Druckes der Luf als auch zu einer ersten Verringerung der Strömungs-Geschwindigkeit (66) der Luft führt, während sie sich in der ersten Kammer (50) befindet, die ausreicht, um eine Menge an Teilchen (68), die in der Luftströmung (56) mitgeführt werden, zu verringern, während sich die Teilchen in der ersten Kammer (50) befinden;
eine Leitung (74) in Strömungsverbindung zwischen dem Auslass (72) der ersten Kammer (50) und einem Einlass (76) einer zweiten Kammer (78), wobei die zweite Kammer (78) so konfiguriert ist, dass sie sowohl eine zweite Richtungsänderung (80) als auch eine dritte Richtungsänderung (82) der Luftströmung hervorruft, wenn sich diese innerhalb der zweiten Kammer (78) befindet;
eine dritte Kammer (88), die zum Empfang einer Luftströmung (56) von einem Auslass (86) der zweiten Kammer (78) und zum Empfang von Umluft (100) von dem Inneren der Kabine (20) konfiguriert ist, wobei die Umluft (100) in selektiven thermischen Wärmeaustausch mit einem Wärmetauscher (108) des HVAC-Systems durch eine zweite Quelle (62) zum Bewegen von Luft gebracht wird, wobei die Umluft (100) dann in die dritte Kammer (88) über eine Öffnung (90) eintritt, die in der dritten Kammer (88) gebildet ist, wobei die Umluft (100) und die Luftströmung (56), die in die dritte Kammer (88) von der zweiten Kammer (78) aus eintritt, sich miteinander mischen; und
einen Filter (104), der im Inneren der Kabine (20) angeordnet ist und in Strömungsverbindung mit der dritten Kammer (88) steht, um zumindest einen Teil der verbleibenden Teilchen (68) zu entfernen, die in der gemischten Luftströmung (102) mitgeführt werden.

2. Das HVAC-System nach irgendeinem der vorhergehenden Ansprüche, **dadurch gekennzeichnet, dass** die zweite Richtungsänderung (80) der Luftströmung (56) ungefähr 90 Grad beträgt.

3. Das HVAC-System nach irgendeinem der vorhergehenden Ansprüche, **dadurch gekennzeichnet, dass** die dritte Richtungsänderung (82) der Luftströmung (56) ungefähr 90 Grad beträgt.

4. Ein Arbeitsfahrzeug (10) mit:
einem Motor, der an einem Fahrgestell (12) befestigt ist, um eine Antriebseinrichtung (14) zur selektiven Bewegung des Fahrgestells (12) zu aktivieren;
eine Fahrerkabine (20), die von dem Fahrgestell (12) getragen wird; und
ein HVAC-System (48) nach irgendeinem der vorhergehenden Ansprüche.

5. Das Arbeitsfahrzeug (10) nach Anspruch 4, **dadurch gekennzeichnet, dass** die erste Quelle zur Bewegung von Luft (40) der Kühlung eines Motors des Arbeitsfahrzeuges (10) zugeordnet ist.

6. Das Arbeitsfahrzeug (10) nach Anspruch 4 oder 5, **dadurch gekennzeichnet, dass** die erste Kammer (50) im Wesentlichen außerhalb des Arbeitsfahrzeuges (10) angeordnet ist.

7. Das Arbeitsfahrzeug (10) nach Anspruch 6, **dadurch gekennzeichnet, dass** die erste Kammer (50) eine Öffnung (70) zur Entfernung von Teilchen (68) aus der ersten Kammer (50) umfasst.

8. Das Arbeitsfahrzeug (10) nach Anspruch 4 oder irgendeinem hiervon abhängigen Anspruch, **dadurch gekennzeichnet, dass** die Öffnung (90) in der dritten Kammer (88) Jalousien (106) umfasst, die von dem Fahrer fort gerichtet sind.

9. Das Arbeitsfahrzeug (10) nach Anspruch 4 oder irgendeinem hiervon abhängigen Anspruch, **dadurch gekennzeichnet, dass** die Jalousien (106) von dem Fahrer fort gerichtet sind.

10. Das Arbeitsfahrzeug (10) nach Anspruch 4 oder irgendeinem hiervon abhängigen Anspruch, **dadurch gekennzeichnet, dass** der Filter (104) unterhalb der dritten Kammer (88) angeordnet ist.

11. Das Arbeitsfahrzeug (10) nach Anspruch 4 oder irgendeinem hiervon abhängigen Anspruch, **dadurch gekennzeichnet, dass** die erste Kammer (50) aus dem Inneren der Kabine (20) entfernbar ist.

## Revendications

1. Système CVCA (48) pour un véhicule de travail (10) doté d'une cabine de conducteur (20), le système comprenant :
une première chambre (50) possédant une entrée (54) pour recevoir un flux d'air (56) de l'extérieur de la cabine (20) et une sortie (72), l'entrée étant adjacente à une première source de déplacement d'air (40) destinée à être utilisée indépendamment du système CVCA (48), l'entrée étant disposée de façon à provoquer un premier changement de direction (60) du flux d'air (56) à l'intérieur de la première chambre (50), la première chambre (50) engendrant à la fois une première réduction (64) de la pression d'air et une première réduction (66) de la vitesse d'écoulement d'air à l'intérieur de la première chambre (50), suffisantes pour réduire la quantité de particules entraînées dans le flux d'air (56) lorsque les particules sont à l'intérieur de la première chambre (50),
un conduit (74) en communication de fluide entre la sortie (72) de la première chambre (50) et l'entrée (76) d'une seconde chambre (78), la seconde chambre (78) étant configurée pour engendrer à la fois un second changement de direction (80) et un troisième changement de direction (82) du flux d'air (56) présent à l'intérieur de la seconde chambre (78),
une troisième chambre (88) configurée pour recevoir un flux d'air (56) d'une sortie (86) de la seconde chambre (78) et pour recevoir de l'air recirculé (100) depuis l'intérieur de la cabine (20), l'air recirculé (100) étant mis en échange thermique sélectif avec un échangeur de chaleur (108) du système CVCA par une seconde source de déplacement d'air (62), l'ai recirculé (100) entrant ensuite dans la troisième chambre (88) via une ouverture (90) formée dans la troisième chambre (88), et l'air recirculé (100) et le flux d'air (56) entrant dans la troisième chambre (88) depuis la seconde chambre (78) se mélangeant ensemble, et
un filtre (104) positionné à l'intérieur de la cabine (20) et en communication fluidique avec la troisième chambre (88) pour enlever au moins une partie des particules restantes (68) entraînées dans le flux d'air mélangé (102).

2. Système CVCA selon l'une quelconque des revendications précédentes, **caractérisé en ce que** le second changement de direction (80) du flux d'air (56) est d'environ 90 degrés.

3. Système CVCA selon l'une quelconque des revendications précédentes, **caractérisé en ce que** le troisième changement de direction (82) du flux d'air (56) est d'environ 90 degrés.

4. Véhicule de travail (10) comprenant :
un moteur fixé à un châssis (12) pour actionner un dispositif d'entraînement (14) afin de déplacer sélectivement le châssis (12), une cabine de conducteur (20) supportée par le châssis (12), et un système CVCA (48) selon l'une quelconque des revendications précédentes.

5. Véhicule de travail (10) selon la revendication 4, **caractérisé en ce que** la première source de déplacement d'air (40) est associée au refroidissement du moteur du véhicule de travail (10).

6. Véhicule de travail (10) selon la revendication 4 ou 5, **caractérisé en ce que** la première chambre (50) est située sensiblement à l'extérieur du véhicule de travail (10).

7. Véhicule de travail (10) selon la revendication 6, **caractérisé en ce que** la première chambre (50) comprend une ouverture (70) pour enlever les particules (68) de la première chambre (50).

8. Véhicule de travail (10) selon la revendication 4 ou l'une quelconque revendication qui s'en rapporte, **caractérisé en ce que** l'ouverture (90) dans la troisième chambre (88) comprend des ouies (106) orientées à l'opposé d'un conducteur.

9. Véhicule de travail (10) selon la revendication 4 ou l'une quelconque revendication qui s'en rapporte, **caractérisé en ce que** les ouïes (106) sont tournées vers l'arrière du conducteur.

10. Véhicule de travail (10) selon la revendication 4 ou l'une quelconque revendication qui s'en rapporte, **caractérisé en ce que** le filtre (104) est positionné en dessous de la troisième chambre (88).

11. Véhicule de travail (10) selon la revendication 4 ou l'une quelconque revendication qui s'en rapporte, **caractérisé en ce que** la première chambre (50) est amovible de l'extérieur de la cabine (20).
